# NEUE EUROPÄISCHE PATENTSCHRIFT

(11) **EP 0 376 154 B2**
(45) Veröffentlichungstag und Bekanntmachung des Hinweises auf die Entscheidung über den Einspruch: **27.09.2000**
(45) Hinweis auf die Patenterteilung: 27.03.1996
(21) Anmeldenummer: 89123611.9
(22) Anmeldetag: 21.12.1989
(51) Int. Cl.: C07F 7/08, C07F 7/30, C08F 10/00, C08F 4/642

(54) **Bisindenyl-Derivat und Verfahren zu seiner Herstellung**
Bisindenyl derivative and method for its preparation
Dérivé de bisindényle et son procédé de préparation

(30) Priorität: 30.12.1988 DE 3844282
(43) Veröffentlichungstag der Anmeldung: 04.07.1990
(60) Teilanmeldung: 95113494.9
(73) Patentinhaber: TARGOR GmbH, 55116 Mainz (DE)
(72) Erfinder: Rohrmann, Jürgen, Dr., D-6237 Liederbach (DE); Antberg, Martin, Dr., D-6238 Hofheim am Taunus (DE)

(56) Entgegenhaltungen:
- EP-A- 0 185 918
- EP-A- 0 256 981
- EP-A- 0 320 762
- EP-A- 0 321 852
- J. AM. CHEM. SOC., Band 104, Nr. 8, 1982, Seiten 2109-2112; A.D. McMASTER et al.: "Stereochemically nonrigid silanes, Germanes and stannanes. 10. Diastereoisomerism and metalltropic behaviour in polyindenyl derivatives of Germanium and tin. Facile stereomutation"
- Journal AM. CHEM. SOC., Band 73, November 1951, Seiten 5135-5138; L.H. SOMMER et al.: "Silylindenes and silylindans"
- ANGEWANDTE CHEMIE, Band 28, Nr. 11, 1989, Seiten 1511-1512, VCHVerlagsgesellschaft mbH, Weinheim, DE; W.A. HERRMANN et al.: "The first exampleof an ethylene-selective soluble ziegler catalyst of the zirconocene class"

## Beschreibung

Die vorliegende Erfindung bezieht sich auf ein verbessertes Verfahren zur Herstellung von silyl- oder germylverbrückten Bisindenyl-Derivaten.

Verbindungen dieses Typs können als Ligandsysteme zum Aufbau von chiralen, stereorigiden Metallocen-Komplexen verwendet werden. Insbesondere die Zirkon- und Hafniumdichlorid-Komplexe können als hochaktive, stereospezifische Katalysatoren zur Herstellung von hochisotaktischem Polypropylen eingesetzt werden (vgl. EP 129 368).

Es besteht Interesse daran, Verbindungen des Typs 1,1′-(R,R′(Si,Ge)bisindenyl (R, R′ = Alkyl, Aryl) zur Synthese von verbrückten Metallocenen, insbesondere Zirkon- und Hafniumdichlorid-Derivaten zu verwenden.

In der Literatur ist bisher lediglich die Synthese von 1,1′-(Dimethylsilandiyl)bisindenyl in einer Ausbeute von 24 % durch Umsetzung von Indenyllithium mit Dimethyldichlorsilan in Xylol beschrieben (vgl. C.H. Sommer, N.S. Marans, JACS 73 (1951) 5135). Hierbei wurde die Silylkomponente zur Indenyllithium-Lösung zugetropft und der Ansatz anschließend für 24 Stunden bei 100°C gerührt.

Nunmehr wurde gefunden, daß man silyl- und germylverbrückte Verbindungen in wesentlich höheren Ausbeuten und bei milderen Bedingungen erhält, wenn man die Zugabefolge umgekehrt, also die Indenylkomponente als Lösung langsam zur Dichlorsilyl- oder -germyl-Verbindung zugibt.

Die Erfindung betrifft somit ein Bisindenyl-Derivat der Formel I 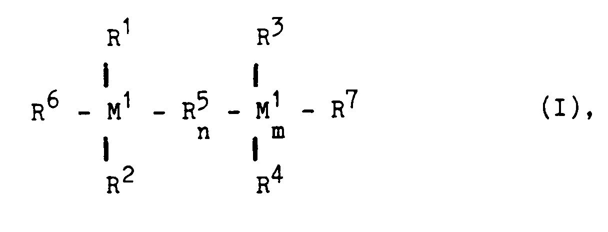
worin M¹ Silizium oder Germanium ist,
m null oder 1 bedeutet, bei m = null n = null und bei m = 1 n = null oder 1 ist,
R¹, R², R³ und R⁴ gleich oder verschieden sind und ein Wasserstoffatom, eine C₁-C₃₀-Alkylgruppe, eine C₂-C₁₀-Alkenylgruppe, eine C₆-C₁₀-Arylgruppe, eine C₇-C₄₀-Arylalkylgruppe, eine C₇-C₄₀-Alkylarylgruppe, eine C₈-C₄₀-Arylalkenylgruppe, eine C₁-C₁₀-Alkoxygruppe, eine C₆-C₁₀-Aryloxygruppe, eine halogenierte C₁-C₂₀-Alkylgruppe, eine halogenierte C₆-C₁₀-Arylgruppe oder ein Halogenatom bedeuten, oder
R¹ und R² oder R³ und R⁴ mit dem sie verbindenden Atom einen Ring bilden.
R⁵ eine C₁-C₈-Alkylengruppe, eine C₆-C₁₀-Arylengruppe, eine C₇-C₄₀-Arylalkylengruppe, eine C₇-C₄₀-Alkylarylengruppe, eine Gruppe -O[Si(CH₃)₂-O]ₚ-, worin p eine ganze Zahl von 1 bis 5 ist, oder ein Chalkogenatom bedeutet, und
R⁶ und R⁷ gleich oder verschieden sind und einen substituierten Indenylrest bedeuten, ausgenommen 1,1'-(Dimethylsilandiyl)bisindenyl.

Die Erfindung betrifft weiterhin ein Verfahren zur Herstellung dieser Verbindung.

In Formel I ist M¹ Silizium oder Germanium. m ist null oder 1. Bei m = null ist n ebenfalls null und bei m = 1 ist n null oder 1.

R¹, R², R³ und R⁴ sind gleich oder verschieden und bedeuten ein Wasserstoffatom, eine C₁-C₃₀-, vorzugsweise C₁-C₂-Alkylgruppe, eine C₂-C₁₀-, vorzugsweise C₂-Alkenylgruppe, eine C₆-C₁₀-, vorzugsweise C₆-Arylgruppe, eine C₇-C₄₀-, vorzugsweise C₇-Arylalkylgruppe, eine C₇-C₄₀-, vorzugsweise C₇-C₉-Alkylarylgruppe, eine C₈-C₄₀-, vorzugsweise C₈-Arylalkenylgruppe, eine C₁-C₁₀-, vorzugsweise C₁-C₃-Alkoxygruppe, eine C₆-C₁₀-, vorzugsweise C₆-Aryloxygruppe, eine halogenierte C₁-C₂₀-, vorzugsweise C₁-C₃-Alkylgruppe, insbesondere Perfluoralkylgruppe, eine halogenierte C₆-C₁₀-, vorzugsweise C₆-Arylgruppe, insbesondere Perfluorarylgruppe, oder ein Halogenatom, vorzugsweise Chlor. R¹ und R² oder R³ und R⁴ können auch mit dem sie verbindenden Atom einen Ring bilden, vorzugsweise einen 4-6-atomigen Ring.
Insbesondere bedeuten R¹, R², R³ und R⁴ Methyl, Ethyl, Phenyl oder Vinyl.

R⁵ ist eine C₁-C₈-, vorzugsweise C₂-Alkylengruppe, eine C₆-C₁₀-, vorzugsweise C₆-Arylengruppe, eine C₇-C₄₀-, vorzugsweise C₇-C₉-Arylalkylengruppe, eine C₇-C₄₀-, vorzugsweise C₇-C₉-Alkylarylengruppe, eine Gruppe -O[Si(CH₃)₂-O]ₚ-, wobei p eine ganze Zahl von 1 bis 5 ist, oder ein Chalkogenatom, vorzugsweise Sauerstoff.

R⁶ und R⁷ sind gleich oder verschieden, vorzugsweise gleich, und bedeuten eine unsubstituierte oder substituierte Indenylgruppe. Beispiele für substituierte Indene sind:
1-(Trimethylsilyl)inden, 1-Phenylinden, 1-, 2-, 4- oder 5-Methoxyinden, 1-, 2-, 4- oder 5-Methylinden und 4-, 5-, 6- oder 7-Fluorinden. Bevorzugt wird Inden oder 1-Methylinden eingesetzt.

Das erfindungsgemäße Bisindenylderivat der Formel I wird hergestellt durch Umsetzung einer Verbindung der Formel II 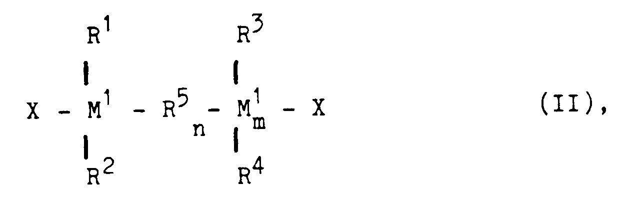 worin M¹, R¹, R², R³, R⁴, m und n die vorgenannte Bedeutung haben und X ein Halogenatom, vorzugsweise Chlor, ist, mit einer Verbindung der Formeln III oder IV

R⁶ - M² (III),

R⁷-M² (IV),

worin R⁶ und R⁷ die vorgenannte Bedeutung haben und M² ein Alkalimetallatom, vorzugsweise Kalium und Lithium, insbesondere Lithium, ist.

Die Reaktion wird in einem inerten, absolutierten Lösemittel durchgeführt. Geeignete Lösemittel sind aromatische Kohlenwasserstoffe, wie beispielsweise Toluol oder Xylol, aliphatische Kohlenwasserstoffe, wie beispielsweise Hexan oder Pentan, oder Ether wie beispielsweise Diethylether, Tetrahydrofuran und Dioxan. Vorzugsweise wird Diethylether verwendet.

Die Reaktionstemperatur beträgt -40 bis 100°C, vorzugsweise 0°C bis 50°C.

Die Reaktionszeit beträgt 1 bis 100 Stunden, vorzugsweise 4 bis 20 Stunden, davon werden 1/4 bis 20 Stunden, vorzugsweise 1 bis 4 Stunden, für die Zugabe der Lösung der Verbindung III zur Lösung oder Suspension der Verbindung II aufgewendet. Verbindung II wird stets vorgelegt und Verbindung III oder IV zugegeben.

Die Reaktion wird unter Rühren und in einer Inertgasatmosphäre durchgeführt. Das erfindungsgemäße Verfahren weist den Vorteil auf, daß die silyl- oder germylverbrückten Bisindenyl-Verbindungen gegenüber dem bekannten Syntheseverfahren durch eine Umkehrung der Zugabefolge in wesentlich höheren Ausbeuten entstehen.

Alle nachfolgenden Arbeitsoperationen sind in Inertgasatmosphäre unter Verwendung absolutierter Lösemittel durchgeführt worden (Schlenk-Technik).

### Beispiel 1

### 1,1′-(Dimethylsilandiyl)bisindenyl (1)

Eine Lösung von 30 g (0,23 mol) über Aluminiumoxid filtriertes Inden (techn., ∼91 %) in 200 cm³ Diethylether wurde unter Eiskühlung mit 80 cm³ (0,20 mol) einer 2,5 molaren Lösung von n-Butyllithium in Hexan versetzt. Man rührte den Ansatz noch 15 min bei Raumtemperatur und gab die orangefarbene Lösung über eine Kanüle innerhalb 2 Stunden zu einer Lösung von 13,0 g (0,10 mol) Dimethyldichlorsilan (99 %) in 30 cm³ Diethylether. Die orangefarbene Suspension wurde über Nacht gerührt und dreimal mit 100 - 150 cm³ Wasser ausgeschüttelt. Die gelbe organische Phase wurde zweimal über Natriumsulfat getrocknet und im Rotationsverdampfer eingedampft. Das verbleibende orange Öl wurde 4 bis 5 Stunden im Ölpumpenvakuum bei 40°C gehalten und von überschüssigem Inden befreit, wobei ein weißer Niederschlag ausfiel. Durch Zugabe von 40 cm³ Methanol und Kristallisation bei -35°C ließen sich insgesamt 20,4 g (71 %) der Verbindung 1 als weißes bis beiges Pulver isolieren. Fp. 79 - 81°C. ¹H-NMR-Spektrum (CDCl₃): 2 Diastereomere (∼1:1), 7,14 - 7,50 (arom. H), 6,40 - 6,90 (olefin. H), 3,62 (allyl. H), -0,47, -0,28, -0,06 ppm (SiCH₃).
Korrekte Elementaranalysen.

### Beispiel 2

Es wurde analog Beispiel 1 verfahren. Nach dem Abziehen des Indens im Ölpumpenvakuum wurde das Rohprodukt an 350 g Kieselgel 60 chromatographiert. Mit Hexan/Methylenchlorid (5:1 Vol.-Teile) ließen sich 23,6 g (82 %) der Verbindung 1 eluieren.

### Beispiel 3

In 100 cm³ Tetrahydrofuran wurden 7,8 g (0,20 mol) kleingeschnittenes Kalium vorgelegt. Innerhalb 1 Stunde wurden 30 cm³ (0,23 mol) über Aluminiumoxid filtriertes Inden (techn., ∼91 %) unter kräftigem Rühren so zugetropft, daß das Lösemittel leicht siedete. Anschließend wurde der Ansatz noch 2 Stunden unter Rückfluß erhitzt, bis das Kalium vollständig umgesetzt war. Die so bereitete Lösung von Indenylkalium wurde analog Beispiel 1 mit Dimethyldichlorsilan umgesetzt und aufgearbeitet. Man erhielt 16,1 g (56 %) der Verbindung 1 als weißes Pulver.

### Beispiel 4

### 1,1′-(Diethylsilandiyl)bisindenyl 2

Eine Lösung von 15,7 g (0,10 mol) Diethyldichlorsilan in 30 cm³ Diethylether wurde analog Beispiel 1 mit 0,20 mol Indenyllithium-Lösung umgesetzt und aufgearbeitet. Das nach dem Abziehen im Ölpumpenvakuum verbleibende Öl wurde an 400 g Kieselgel 60 chromatographiert. Mit Hexan/Methylenchlorid (10:1 Vol.-Teile) eluierte man das Produkt in einer blaßgelben Zone. Nach Abziehen des Lösemittels und Umkristallisation aus Hexan bei -35°C erhielt man 19,5 g (62 %) der Verbindung 2 als beiges Pulver.
¹H-NMR-Spektrum (CDCl₃): 2 Diastereomere (∼1:1), 7,1 - 7,6 (arom. H), 6,2 - 7,0 (olefin. H), 3,6 (allyl. H), 0,1 - 0,8 ppm (SiC₂H₅).
Korrekte Elementaranalysen.

### Beispiel 5

### 1,1′-(Methylphenylsilandiyl)bisindenyl (3)

Eine Lösung von 19,1 g (0,10 mol) Methylphenyldichlorsilan (98 %) in 30 cm³ Diethylether wurde analog Beispiel 1 mit 0,20 mol Lithiumindenyl-Lösung umgesetzt und aufgearbeitet. Aus Hexan kristallisierten bei -35°C insgesamt 30,1 g (86 %) der Verbindung 3 (weißes Kristallpulver) aus.
¹H-NMR-Spektrum (CDCl₃): 3 Diastereomere (11:2:1), 7,0 - 7,5 (arom. H), 6,5 - 6,9 (olefin. H), 3,91 - 3,97 (allyl. H), -0,31, -0,14, -0,03 ppm (SiCH₃).
Korrekte Elementaranalysen.

### Beispiel 6

### 1,1′-(Diphenylsilandiyl)bisindenyl (4)

Eine Lösung von 25,3 g (0,10 mol) Diphenyldichlorsilan (99 %) in 40 cm³ Diethylether wurde analog Beispiel 1 mit 0,20 mol Lithiumindenyl-Lösung umgesetzt und aufgearbeitet. Das nach dem Abziehen im Ölpumpenvakuum verbleibende braune Öl wurde an 350 g Kieselgel 60 chromatographiert. Mit Hexan/Toluol (3:1 Vol.-Teile) ließen sich insgesamt 16,0 g (39 %) der Verbindung 4 eluieren, die nach dem Abziehen des Lösemittels als beiges Pulver anfiel.
¹H-NMR-Spektrum (CDCl₃): 2 Diastereomere (∼1:1), 7,0 - 7,5 (arom. H), 6,05 - 6,95 (olefin. H), 4,28, 4,33 ppm (allyl. H).
Korrekte Elementaranalysen.
Das Massenspektrum zeigte das zu erwartende Zerfallsmuster.

### Beispiel 7

### 1,1′-(Phenylvinylsilandiyl)bisindenyl (5)

Eine Lösung von 20,3 g (0,10 mol) Phenylvinyldichlorsilan in 30 cm³ Diethylether wurde analog Beispiel 1 mit 0,20 mol Lithiumindenyl-Lösung umgesetzt und aufgearbeitet. Aus Hexan fielen bei -35°C 16,3 g (45 %) der Verbindung 5 als weißes Pulver aus.
¹H-NMR-Spektrum (CDCl₃): 2 Diastereomere (4:1), 7,0 - 7,6 (arom. H), 6,5 - 6,9 (olefin. H), 5,32 - 6,15 (vinyl. H), 4,02, 4,06 ppm (allyl. H).
Korrekte Elementaranalysen.

### Beispiel 8

### 1,1′-(Methylvinylsilandiyl)bisindenyl (6)

14,1 g (0,10 mol) Methylvinyldichlorsilan in 30 cm³ Diethylether wurden mit 0,20 mol Lithiumindenyl-Lösung analog Beispiel 1 umgesetzt und aufgearbeitet. Aus Hexan kristallisierten bei -35°C insgesamt 14,4 g (48 %) der Verbindung 6.
¹H-NMR-Spektrum (CDCl₃):
7,1 - 7,5 (m, 8, arom. H), 6,92 - 6,96 (m, 2, β-olefin. H), 6,63 (dd, 1, α-olefin. H), 6,57 (dd, 1 α-olefin. H), 5,42 - 5,90 (m, 3, vinyl. H), 3,66 (s, 2, allyl. H), -0,25 ppm (s, 3, SiCH₃).
Korrekte Elementaranalysen.

### Beispiel 9

### 1,1′-(Phenylsilandiyl)bisindenyl (7)

17,7 g (0,10 mol) Phenyldichlorsilan in 30 cm³ Diethylether wurden analog Beispiel 1 mit 0,20 mol Lithiumindenyl-Lösung umgesetzt und aufgearbeitet. Das nach dem Abziehen im Ölpumpenvakuum verbleibende Öl wurde mit Hexan/Toluol (2:1 Vol.-Teile) über eine Fritte mit 15 cm Kieselgel 60 filtriert. Das nach dem Abziehen der Lösemittel verbleibende Öl wurde mit Hexan versetzt. Bei -35°C kristallisierten 24,2 g (72 %) der Verbindung 7 aus.
¹H-NMR-Spektrum (CDCl₃): 3 Diastereomere, 7,0 - 7,5 (arom. H), 6,4 - 6,9 (olefin. H), 4,42, 4,27, 3,85 (3x t, Si-H), 4,00, 3,87, 3,85, 3,60 ppm (4 x m, allyl. H). Massen- und Infrarotspektrum entsprach den Erwartungen.
Korrekte Elementaranalysen.

### Beispiel 10

### 1,1′-|1,2-Ethandiylbis(dimethylsilyl)]bisindenyl (8)

Eine Lösung von 21,5 g (0,10 mol) 1,2-Bis-(chlordimethylsilyl)-ethan (80 %) in 50 cm³ Diethylether wurde mit 0,20 mol Lithiumindenyl-Lösung analog Beispiel 1 umgesetzt und aufgearbeitet. Aus Hexan kristallisierten bei -35°C 28,2 g (82 %) der Verbindung 8 in Form farbloser Kristalle aus. Fp. 71 - 74°C. ¹H-NMR-Spektrum (CDCl₃):
7,1 - 7,5 (arom. H), 6,90 (β-olefin. H), 6,57 (α-olefin. H), 3,53 (allyl. H), 0,25 - 0,46 (C₂H₄), -0,10, -0,11, -0,15, -0,16 (SiCH₃).
Korrekte Elementaranalysen.

### Beispiel 11

### 1,1′-|Bis(dimethylsilyl)]bisindenyl (9)

Zu einer Lösung von 26,0 g (0,14 mol) Tetramethyldichlorsilan in 250 cm³ Diethylether wurde innerhalb 1 Stunde bei 0°C eine etherische Lösung von 0,30 mol Indenyllithium zugetropft. Nach einstündigem Rühren bei Raumtemperatur wurden 50 cm³ Wasser hinzugefügt, die organische Phase abgetrennt, über Magnesiumsulfat getrocknet und das Lösemittel entfernt. Der Rückstand wurde mit Methanol gewaschen und im Vakuum getrocknet.
Ausbeute: 26,5 g (55 %).
¹H-NMR-Spektrum (CDCl₃): 2 Diastereomere (∼1:1), 7,45 - 7,11 (m, 8, arom. H), 6,86, 6,84 (2 x ddd, 2 olefin. H), 6,59, 6,46 (2 x dd, 2 olefin. H), 3,43, 3,32 (2 x m, 2 allyl. H), 0,05, -0,04, -0,16m -0,31 (4 x s, 4 x 3H, Si-CH₃).

### Beispiel 12

### 1,1′-(Dimethylsilandiyl)bis(3-methylindenyl) (10)

Eine Lösung von 24,7 g (0,19 mol) 1-Methylinden in 200 cm³ Diethylether wurde bei 0°C mit 45 cm³ (0,18 mol) einer 2,5-molaren Lösung von n-Butyllithium in n-Hexan versetzt. Nach 20 Minuten Rühren bei Raumtemperatur wurde die gelbe Lösung über eine Kanüle innerhalb von 2 Stunden zu einer Lösung von 12,3 g (0,09 mol) Dimethyldichlorsilan in 30 cm³ Diethylether gegeben und der Ansatz über Nacht gerührt. Aufarbeitung analog Beispiel 1. Aus Hexan kristallisierten bei -35°C 20,4 g (68 %) der Verbindung 10 in Form gelblicher Kristalle aus.
¹H-NMR-Spektrum (CDCl₃): 2 Diastereomere (∼1:1), 7,1 - 7,5 (arom. H), 6,26, 6,13 (α-olefin. H), 3,48 (allyl. H), 2,22 (Inden-CH₃), -0,15, -0,31, -0,48 (SiCH₃).
Korrekte Elementaranalysen.

### Beispiel 13

### 1,1′-(Dimethylgermandiyl)bisindenyl (11)

Eine Lösung von 5,0 g (0,028 mol) Dimethyldichlorgerman in 10 cm³ Diethylether wurde analog Beispiel 1 mit 0,058 mol Indenyllithium-Lösung umgesetzt und aufgearbeitet. Die Kristallisation aus n-Hexan bei -35°C ergab 7,2 g (75 %) der Verbindung 11 als weißes Pulver.
¹H-NMR-Sepktrum (CDCl₃): 2 Diastereomere (∼1:1), 7,1 - 7,5 (arom. H), 6,9 - 7,1 (β-olefin. H), 6,42 - 6,65 (α-olefin. H), 3,77 (allyl. H) 0,09, -0,13, -0,30 ppm (GeCH₃).
Korrekte Elementaranalysen.

### Beispiel 14

### 1,1′-(Diethylgermandiyl)bisindenyl (12)

Eine Lösung von 25 g (0,125 mol) Diethyldichlorgerman in 30 cm³ Diethylether wurde bei Raumtemperatur mit 0,25 mol Indenyllithium-Lösung analog Beispiel 1 umgesetzt und aufgearbeitet. Das nach dem Abziehen im Ölpumpenvakuum verbleibende Öl wurde an 350 g Kieselgel 80 chromatographiert. Verbindung 12 wurde mit Hexan/Methylenchlorid (20:1 Vol.-Teile) eluiert und anschließend aus wenig Hexan bei -35°C umkristallisiert. Ausbeute: 27, 9 g (62 %) weißes Pulver.
¹H-NMR-Spektrum (CDCl₃): 2 Diastereomere (1:1), 7,0 - 7,6 (arom. H), 6,32 - 6,62 (olefin. H), 3,75 (allyl. H), 0,35 - 0,87 (GeC₂H₅).
Korrekte Elementaranalysen.

## Patentansprüche (Patentansprüche für folgende(n) Vertragsstaat(en): BE, DE, FR, GB, IT, NL)

1. Bisindenyl-Derivat der Formel I 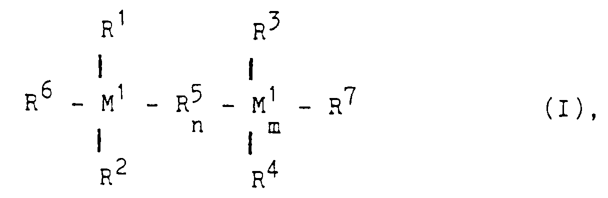
worin M¹ Silizium oder Germanium ist,
m null oder 1 bedeutet, bei m = null n = null und bei m = 1 n = null oder 1 ist,
R¹, R^{2,} R³ und R⁴ gleich oder verschieden sind und ein Wasserstoffatom, eine C₁-C₃₀-Alkylgruppe, eine C₂-C₁₀-Alkenylgruppe, eine C₆-C₁₀-Arylgruppe, eine C₇-C₄₀-Arylalkylgruppe, eine C₇-C₄₀-Alkylarylgruppe, eine C₈-C₄₀-Arylalkenylgruppe, eine C₁-C₁₀-Alkoxygruppe, eine C₆-C₁₀-Aryloxygruppe, eine halogenierte C₁-C₂₀-Alkylgruppe, eine halogenierte C₆-C₁₀-Arylgruppe oder ein Halogenatom bedeuten, oder
R¹ und R² oder R³ und R⁴ mit dem sie verbindenden Atom einen Ring bilden.
R⁵ eine C₁-C₈-Alkylengruppe, eine C₆-C₁₀-Arylengruppe, eine C₇-C₄₀-Arylalkylengruppe, eine C₇-C₄₀-Alkylarylengruppe, eine Gruppe O[Si(CH₃)₂-O]ₚ-, worin p eine ganze Zahl von 1 bis 5 ist, oder ein Chalkogenatom bedeutet, und
R⁶ und R⁷ gleich oder verschieden sind und einen substituierten Indenylrest bedeuten.

2. Verfahren zur Herstellung eines Bisindenyl-Derivates der Formel I 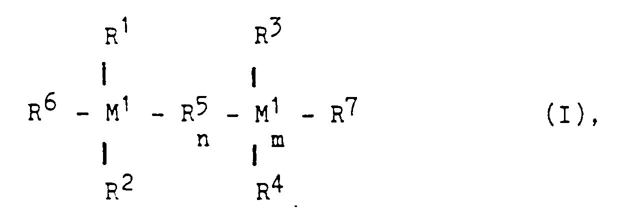
worin M¹ Silizium oder Germanium ist,
m null oder 1 bedeutet, bei m = null n = null und bei m = 1 n = null oder 1 ist,
R¹ R², R³ und R⁴ gleich oder verschieden sind und ein Wasserstoffatom, eine C₁-C₃₀-Alkylgruppe, eine C₂-C₁₀-Alkenylgruppe, eine C₆-C₁₀-Arylgruppe, eine C₇-C₄-Arylalkylgruppe, eine C₇-C₄₀-Alkylarylgruppe, eine C₈-C₄₀-Arylalkenylgruppe, eine C₁-C₁₀-Alkoxygruppe, eine C₆-C₁₀-Aryloxygruppe, eine halogenierte C₁-C₂₀-Alkylgruppe, eine halogenierte C₆-C₁₀-Arylgruppe oder ein Halogenatom bedeuten, oder
R¹ und R² oder R³ und R⁴ mit dem sie verbindenden Atom einen Ring bilden,
R⁵ eine C₁-C₈-Alkylengruppe, eine C₆-C₁₀-Arylengruppe, eine C₇-C₄₀-Arylalkylengruppe, eine C₇-C₄₀-Alkylarylengruppe, eine Gruppe -O(Si(CH₃)₂-O]ₚ-, worin p eine ganze Zahl von 1 bis 5 ist, oder ein Chalkogenatom bedeutet, und
R⁶ und R⁷ gleich oder verschieden sind und einen unsubstituierten oder substituierten Indenylrest bedeuten,
durch Umsetzung einer Indenyl-alkalimetallverbindung mit einer Verbindung der Formel II 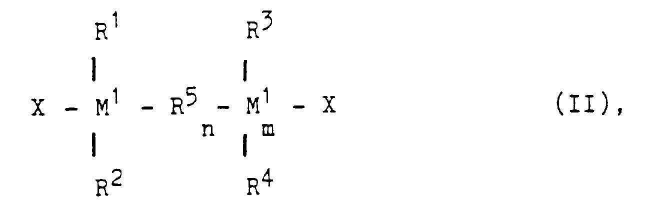
worin M¹, R¹, R², R³, R⁴, m und n die vorgenannte Bedeutung haben und X ein Halogenatom ist, dadurch gekennzeichnet, daß die Verbindung der Formel II in Lösung oder Suspension vorgelegt wird und die Lösung einer Verbindung der Formeln III oder IV
R⁶ - M² (III),
R⁷-M² (IV),
worin R⁶ und R⁷ die vorgenannte Bedeutung haben und M² ein Alkalimetallatom ist, bei einer Temperatur von -40 bis 100°C während 1 bis 100 Stunden zu der Lösung oder Suspension der Verbindung II zugegeben wird.

3. Verwendung der Verbindung der Formel 1 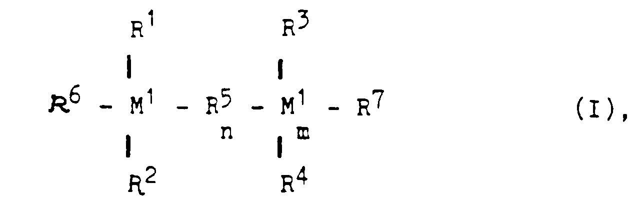
worin M¹ Silizium oder Germanium ist,
m null oder 1 bedeutet, bei m = null n = null und bei m = 1 n = null oder 1 ist,
R¹, R², R³ und R⁴ gleich oder verschieden sind und ein Wasserstoffatom, eine C₁-C₃₀-Alkylgruppe, eine C₂-C₁₀-Alkenylgruppe, eine C₆-C₁₀-Arylgruppe, eine C₇-C₄-Arylalkylgruppe, eine C₇-C₄₀-Alkylarylgruppe, eine C₈-C₄₀-Arylalkenylgruppe, eine C₁-C₁₀-Alkoxygruppe, eine C₆-C₁₀-Aryloxygruppe, eine halogenierte C₁-C₂₀-Alkylgruppe, eine halogenierte C₆-C₁₀-Arylgruppe oder ein Halogenatom bedeuten, oder
R¹ und R² oder R³ und R⁴ mit dem sie verbindenden Atom einen Ring bilden,
R⁵ eine C₁-C₈-Alkylengruppe, eine C₆-C₁₀-Arylengruppe, eine C₇-C₄₀-Arylalkylengruppe, eine C₇-C₄₀-Alkylarylengruppe, eine Gruppe -O[Si(CH₃)₂-O]ₚ-, worin p eine ganze Zahl von 1 bis 5 ist, oder ein Chalkogenatom bedeutet, und
R⁶ und R⁷ gleich oder verschieden sind und einen substituierten Indenylrest bedeuten,
Zur Herstellung von Metallocen Katalysatorkomponenten für die Olefinpolymerisation.

## Patentansprüche (Patentansprüche für folgende(n) Vertragsstaat(en): ES)

1. Verfahren zur Herstellung eines Bisindenyl-Derivates der Formel I 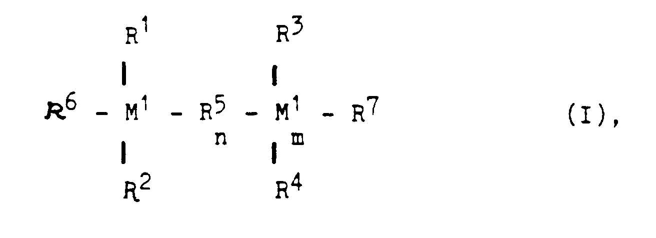
worin M¹ Silizium oder Germanium ist,
m null oder 1 bedeutet, bei m = null n = null und bei m = 1 n = null oder 1 ist,
R¹, R², R³ und R⁴ gleich oder verschieden sind und ein Wasserstoffatom, eine C₁-C₃₀-Alkylgruppe, eine C₂-C₁₀-Alkenylgruppe, eine C₆-C₁₀-Arylgruppe, eine C₇-C₄-Arylalkylgruppe, eine C₇-C₄₀-Alkylarylgruppe, eine C₈-C₄₀-Arylalkenylgruppe, eine C₁-C₁₀-Alkoxygruppe, eine C₆-C₁₀-Aryloxygruppe, eine halogenierte C₁-C₂₀-Alkylgruppe, eine halogenierte C₆-C₁₀-Arylgruppe oder ein Halogenatom bedeuten, oder
R¹ und R² oder R³ und R⁴ mit dem sie verbindenden Atom einen Ring bilden,
R⁵ eine C₁-C₈-Alkylengruppe, eine C₆-C₁₀-Arylengruppe, eine C₇-C₄₀-Arylalkylengruppe, eine C₇-C₄₀-Alkylarylengruppe, eine Gruppe -O[Si(CH₃)₂-O]ₚ-, worin p eine ganze Zahl von 1 bis 5 ist, oder ein Chalkogenatom bedeutet, und
R⁶ und R⁷ gleich oder verschieden sind und einen unsubstituierten oder substituierten Indenylrest bedeuten,
durch Umsetzung einer Indenyl-alkalimetallverbindung mit einer Verbindung der Formel II 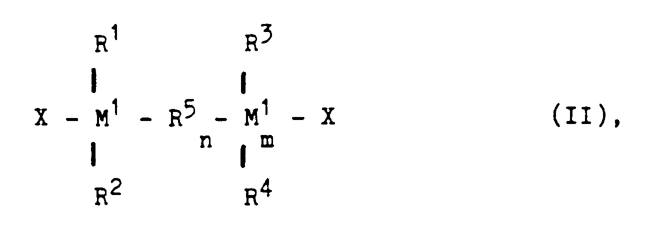
worin M¹, R¹, R², R³, R^{4,} m und n die vorgenannte Bedeutung haben und X ein Halogenatom ist, dadurch gekennzeichnet, daß die Verbindung der Formel II in Lösung oder Suspension vorgelegt wird und die Lösung einer Verbindung der Formeln III oder IV
R⁶ - M² (III),
R⁷-M² (IV),
worin R⁶ und R⁷ die vorgenannte Bedeutung haben und M² ein Alkalimetallatom ist, bei einer Temperatur von -40 bis 100°C während 1 bis 100 Stunden zu der Lösung oder Suspension der Verbindung II zugegeben wird.

2. Verwendung der Verbindung der Formel 1 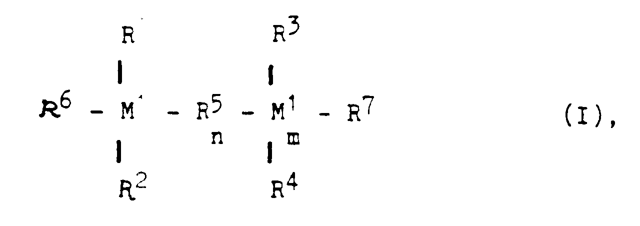
worin M¹ Silizium oder Germanium ist,
m null oder 1 bedeutet, bei m = null n = null und bei m = 1 n = null oder 1 ist,
R¹, R², R³ und R⁴ gleich oder verschieden sind und ein Wasserstoffatom, eine C₁-C₃₀-Alkylgruppe, eine C₂-C₁₀-Alkenylgruppe, eine C₆-C₁₀-Arylgruppe, eine C₇-C₄-Arylalkylgruppe, eine C₇-C₄₀-Alkylarylgruppe, eine C₈-C₄₀-Arylalkenylgruppe, eine C₁-C₁₀-Alkoxygruppe, eine C₆-C₁₀-Aryloxygruppe, eine halogenierte C₁-C₂₀-Alkylgruppe, eine halogenierte C₆-C₁₀-Arylgruppe oder ein Halogenatom bedeuten, oder
R¹ und R² oder R³ und R⁴ mit dem sie verbindenden Atom einen Ring bilden,
R⁵ eine C₁-C₈-Alkylengruppe, eine C₆-C₁₀-Arylengruppe, eine C₇-C₄₀-Arylalkylengruppe, eine C₇-C₄₀-Alkylarylengruppe, eine Gruppe -O[Si(CH₃)₂-O]ₚ-, worin p eine ganze Zahl von 1 bis 5 ist, oder ein Chalkogenatom bedeutet, und
R⁶ und R⁷ gleich oder verschieden sind und einen substituierten Indenylrest bedeuten,
Zur Herstellung von Metallocen Katalysatorkomponenten für die Olefinpolymerisation.

## Claims (Claims for the following Contracting State(s): BE, DE, FR, GB, IT, NL)

1. A bisindenyl derivative of the formula I 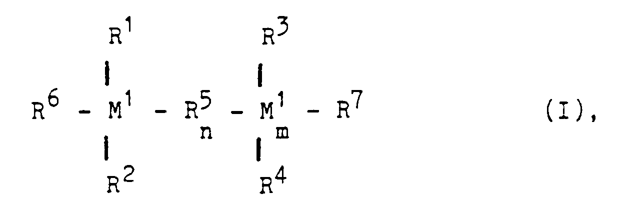
in which M¹ is silicon or germanium,
m is zero or 1, n = zero when m = zero and n = zero or 1 when m = 1,
R¹, R², R³ and R⁴ are identical or different and are a hydrogen atom, a C₁-C₃₀-alkyl group, a C₂-C₁₀-alkenyl group, a C₆-C₁₀-aryl group, a C₇-C₄₀-arylalkyl group, a C₇-C₄₀-alkylaryl group, a C₈-C₄₀-arylalkenyl group, a C₁-C₁₀-alkoxy group, a C₆-C₁₀-aryloxy group, a halogenated C₁-C₂₀-alkyl group, a halogenated C₆-C₁₀-aryl group or a halogen atom, or
R¹ and R² or R³ and R⁴, together with the atom connecting them, form a ring,
R⁵ is a C₁-C₈-alkylene group, a C₆-C₁₀-arylene group, a C₇-C₄₀-arylalkylene group, a C₇-C₄₀-alkylarylene group, an -O[Si(CH₃)₂-O]ₚ- group in which p is an integer from 1 to 5, or a chalcogen atom, and
R⁶ and R⁷ are identical or different and are a substituted indenyl radical.

2. A process for the preparation of a bisindenyl derivative of the formula I 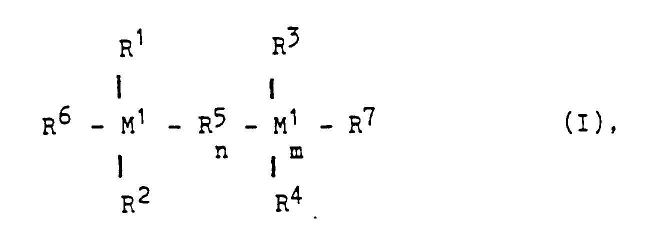
in which M¹ is silicon or germanium,
m is zero or 1, n = zero when m = zero and n = zero or 1 when m = 1,
R¹, R², R³ and R⁴ are identical or different and are a hydrogen atom, a C₁-C₃₀-alkyl group, a C₂-C₁₀-alkenyl group, a C₆-C₁₀-aryl group, a C₇-C₄₀-arylalkyl group, a C₇-C₄₀-alkylaryl group, a C₈-C₄₀-arylalkenyl group, a C₁-C₁₀-alkoxy group, a C₆-C₁₀-aryloxy group, a halogenated C₁-C₂₀-alkyl group, a halogenated C₆-C₁₀-aryl group or a halogen atom, or
R¹ and R² or R³ and R⁴, together with the atom connecting them, form a ring,
R⁵ is a C₁-C₈-alkylene group, a C₆-C₁₀-arylene group, a C₇-C₄₀-arylalkylene group, a C₇-C₄₀-alkylarylene group, an -O[Si(CH₃)₂-O]ₚ- group in which p is an integer from 1 to 5, or a chalcogen atom, and
R⁶ and R⁷ are identical or different and are an unsubstituted or substituted indenyl radical,
by reacting an indenyl(alkali metal) compound with a compound of the formula II 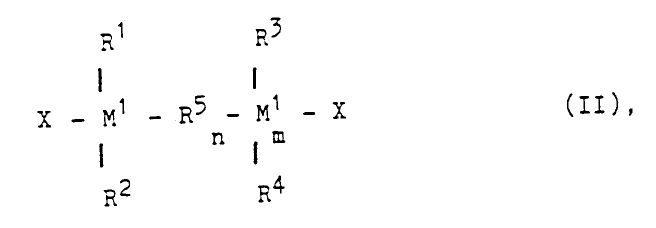
in which M¹, R¹, R², R³, R⁴, m and n have the abovementioned meaning and X is a halogen atom, which comprises initially introducing the compound of the formula II in solution or suspension and adding the solution of a compound of the formula III or IV
R⁶ - M² (III),
R⁷-M² (IV),
in which R⁶ and R⁷ have the abovementioned meaning and M² is an alkali metal atom, at a temperature of from -40 to 100°C over the course of 1 to 100 hours to the solution or suspension of the compound II.

3. The use of a compound of the formula I 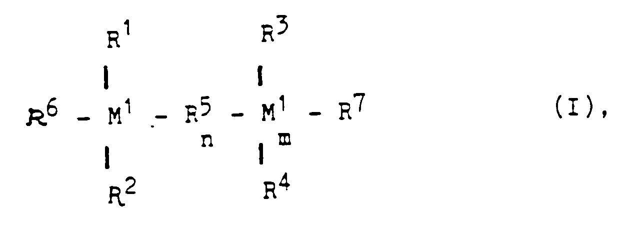
in which M¹ is silicon or germanium,
m is zero or 1, n = zero when m = zero and n = zero or 1 when m = 1,
R¹, R², R³ and R⁴ are identical or different and are a hydrogen atom, a C₁-C₃₀-alkyl group, a C₂-C₁₀-alkenyl group, a C₆-C₁₀-aryl group, a C₇-C₄₀-arylalkyl group, a C₇-C₄₀-alkylaryl group, a C₈-C₄₀-arylalkenyl group, a C₁-C₁₀-alkoxy group, a C₆-C₁₀-aryloxy group, a halogenated C₁-C₂₀-alkyl group, a halogenated C₆-C₁₀-aryl group or a halogen atom, or
R¹ and R² or R³ and R⁴, together with the atom connecting them, form a ring,
R⁵ is a C₁-C₈-alkylene group, a C₆-C₁₀-arylene group, a C₇-C₄₀-arylalkylene group, a C₇-C₄₀-alkylarylene group, an -O[Si(CH₃)₂-O]ₚ- group in which p is an integer from 1 to 5, or a chalcogen atom, and
R⁶ and R⁷ are identical or different and are a substituted indenyl radical, for the preparation of metallocene catalyst components for olefin polymerization.

## Claims (Claims for the following Contracting State(s): ES)

1. A process for the preparation of a bisindenyl derivative of the formula I 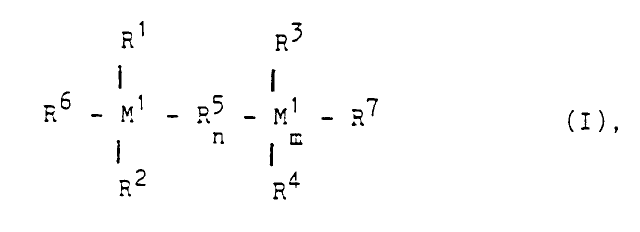
in which M¹ is silicon or germanium,
m is zero or 1, n = zero when m = zero and n = zero or 1 when m = 1,
R¹, R², R³ and R⁴ are identical or different and are a hydrogen atom, a C₁-C₃₀-alkyl group, a C₂-C₁₀-alkenyl group, a C₆-C₁₀-aryl group, a C₇-C₄₀-arylalkyl group, a C₇-C₄₀-alkylaryl group, a C₈-C₄₀-arylalkenyl group, a C₁-C₁₀-alkoxy group, a C₆-C₁₀-aryloxy group, a halogenated C₁-C₂₀-alkyl group, a halogenated C₆-C₁₀-aryl group or a halogen atom, or
R¹ and R² or R³ and R⁴, together with the atom connecting them, form a ring,
R⁵ is a C₁-C₈-alkylene group, a C₆-C₁₀-arylene group, a C₇-C₄₀-arylalkylene group, a C₇-C₄₀-alkylarylene group, an -O[Si(CH₃)₂-O]ₚ- group in which p is an integer from 1 to 5, or a chalcogen atom, and
R⁶ and R⁷ are identical or different and are an unsubstituted or substituted indenyl radical,
by reacting an indenyl(alkali metal) compound with a compound of the formula II 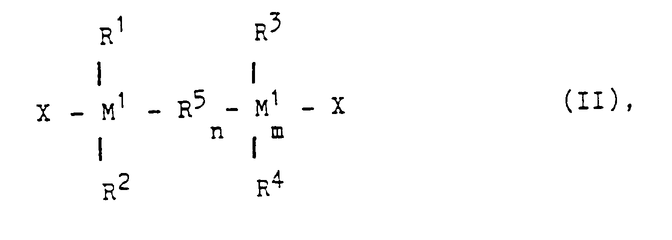
in which M¹, R¹, R², R³, R⁴, m and n have the abovementioned meaning and X is a halogen atom, which comprises initially introducing the compound of the formula II in solution or suspension and adding the solution of a compound of the formula III or IV
R⁶ - M² (III),
R⁷-M² (IV),
in which R⁶ and R⁷ have the abovementioned meaning and M² is an alkali metal atom, at a temperature of from -40 to 100°C over the course of 1 to 100 hours to the solution or suspension of the compound II.

2. The use of a compound of the formula I 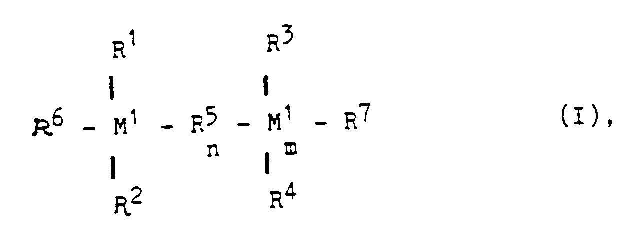
in which M¹ is silicon or germanium,
m is zero or 1, n = zero when m = zero and n = zero or 1 when m = 1,
R¹, R², R³ and R⁴ are identical or different and are a hydrogen atom, a C₁-C₃₀-alkyl group, a C₂-C₁₀-alkenyl group, a C₆-C₁₀-aryl group, a C₇-C₄₀-arylalkyl group, a C₇-C₄₀-alkylaryl group, a C₈-C₄₀-arylalkenyl group, a C₁-C₁₀-alkoxy group, a C₆-C₁₀-aryloxy group, a halogenated C₁-C₂₀-alkyl group, a halogenated C₆-C₁₀-aryl group or a halogen atom, or
R¹ and R² or R³ and R⁴, together with the atom connecting them, form a ring,
R⁵ is a C₁-C₈-alkylene group, a C₆-C₁₀-arylene group, a C₇-C₄₀-arylalkylene group, a C₇-C₄₀-alkylarylene group, an -O[Si(CH₃)₂-O]ₚ- group in which p is an integer from 1 to 5, or a chalcogen atom, and
R⁶ and R⁷ are identical or different and are a substituted indenyl radical, for the preparation of metallocene catalyst components for olefin polymerization.

## Revendications (Revendications pour l'(les) Etat(s) contractant(s) suivant(s): BE, DE, FR, GB, IT, NL)

1. Dérivé de bisindényle de la formule I 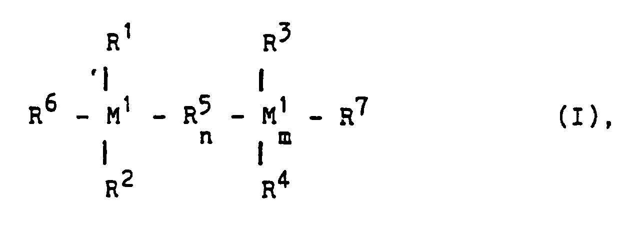
dans laquelle M¹ représente un atome de silicium ou de germanium,
m est 0 ou 1 et, lorsque m est 0, n est 0 et, lorsque m est 1, n est 0 ou 1
R¹, R², R³ et R⁴ sont identiques ou différents et représentent un atome d'hydrogène, un radical alkyle en C₁-C₃₀, un radical alcényle en C₂-C₁₀, un radical aryle en C₆-C₁₀, un radical arylalkyle en C₇-C₄₀, un radical alkylaryle en C₇-C₄₀, un radical arylalcényle en C₈-C₄₀,un radical alcoxy en C₁-C₁₀, un radical aryloxy en C₆-C₁₀, un radical alkyle halogéné en C₁-C₂₀, un radical aryle halogéné en C₆-C₁₀ ou un atome d'halogène, ou bien
R¹ et R² ou R³ et R⁴ forment un cycle avec l'atome qui les relie.
R⁵ représente un radical alkylène en C₁-C₈, un radical arylène en C₆-C₁₀, un radical arylalkylène en C₇-C₄₀, un radical alkylarylène en C₇-C₄₀, un radical O[Si(CH₃)₂-O]ₚ-, dans lequel p est un nombre entier de 1 à 5, ou bien un atome de chalcogène, et R⁶ et R⁷ sont identiques ou différents et représentent un radical indényle substitué.

2. Procédé de préparation d'un dérivé de bisindényle de la formule I 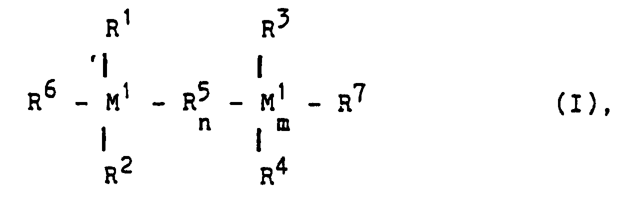
dans laquelle M¹ représente un atome de silicium ou de germanium,
m est 0 ou 1 et, lorsque m est 0, n est 0 et, lorsque m est 1, n est 0 ou 1
R¹, R^{2,}, R³ et R⁴ sont identiques ou différents et représentent un atome d'hydrogène, un radical alkyle en C₁-C₃₀, un radical alcényle en C₂-C₁₀, un radical aryle en C₆-C₁₀, un radical arylalkyle en C₇-C₄₀, , un radical alkylaryle en C₇-C₄₀, un radical arylalcényle en C₈-C₄₀, un radical alcoxy en C₁-C₁₀, un radical aryloxy en C₆-C₁₀, un radical alkyle halogéné en C₁-C₂₀, un radical aryle halogéné en C₆-C₁₀ ou un atome d'halogène, ou bien
R¹ et R² ou R³ et R⁴ forment un cycle avec l'atome qui les relie,
R⁵ représente un radical alkylène en C₁-C₈, un radical arylène en C₆-C₁₀, un radical arylalkylène en C₇-C₄₀, un radical alkylarylène en C₇-C₄₀, un radical O[Si(CH₃)₂-O]ₚ-, dans lequel p est un nombre entier de 1 à 5, ou bien un atome de chalcogène, et
R⁶ et R⁷ sont identiques ou différents et représentent un radical indényle substitué ou non substitué, par réaction avec un composé de la formule II 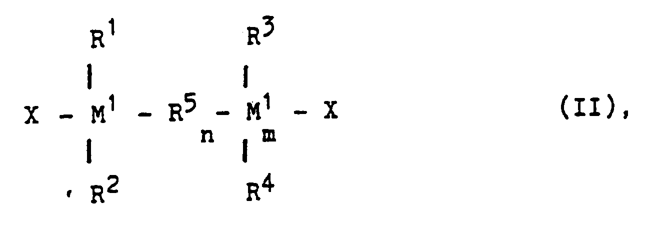
dans laquelle M¹, R¹, R², R³, R⁴, m et n ont la signification indiquée précédemment et X représente un atome d'halogène, caractérisé en ce que le composé de la formule II est introduit en solution ou en suspension et que l'on ajoute la solution d'un composé de formule III ou IV
R⁶-M² (III)
R⁷-M² (IV)
dans lesquelles R⁶ et R⁷ ont la signification indiquée précédemment et M² représente un atome de métal alcalin, à une température de -40 à 100°C pendant de 1 à 100 heures, à la solution ou la suspension du composé II.

3. Utilisation du composé de la formule I 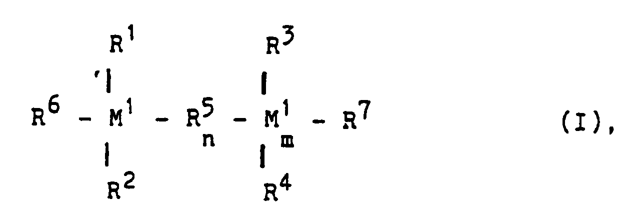
dans laquelle M¹ représente un atome de silicium ou de germanium,
m est 0 ou 1 et, lorsque m est 0, n est 0 et, lorsque m est 1, n est 0 ou 1
R¹, R^{2,}, R³ et R⁴ sont identiques ou différents et représentent un atome d'hydrogène, un radical alkyle en C₁-C₃₀, un radical alcényle en C₂-C₁₀, un radical aryle en C₆-C₁₀, un radical arylalkyle en C₇-C₄₀, , un radical alkylaryle en C₇-C₄₀, un radical arylalcényle en C₈-C₄₀, un radical alcoxy en C₁-C₁₀, un radical aryloxy en C₆-C₁₀, un radical alkyle halogéné en C₁-C₂₀, un radical aryle halogéné en C₆-C₁₀ ou un atome d'halogène, ou bien
R¹ et R² ou R³ et R⁴ forment un cycle avec l'atome qui les relie,
R⁵ représente un radical alkylène en C₁-C₈, un radical arylène en C₆-C₁₀, un radical arylalkylène en C₇-C₄₀, un radical alkylarylène en C₇-C₄₀, un radical O[Si(CH₃)₂-O]ₚ-, dans lequel p est un nombre entier de 1 à 5, ou bien un atome de chalcogène, et
R⁶ et R⁷ sont identiques ou différents et représentent un radical indényle substitué, pour la préparation de composants de catalyseur de type métallocène pour la polymérisation d'oléfines.

## Revendications (Revendications pour l'(les) Etat(s) contractant(s) suivant(s): ES)

1. Dérivé de bisindényle de la formule I 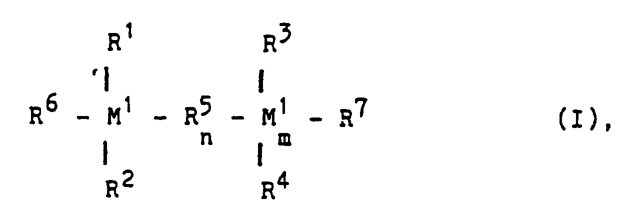
dans laquelle M¹ représente un atome de silicium ou de germanium,
m est 0 ou 1 et, lorsque m est 0, n est 0 et, lorsque m est 1, n est 0 ou 1
R¹, R^{2,}, R³ et R⁴ sont identiques ou différents et représentent un atome d'hydrogène, un radical alkyle en C₁-C₃₀, un radical alcényle en C₂-C₁₀, un radical aryle en C₆-C₁₀, un radical arylalkyle en C₇-C₄₀, un radical alkylaryle en C₇-C₄₀, un radical arylalcényle en C₈-C₄₀, un radical alcoxy en C₁-C₁₀, un radical aryloxy en C₆-C₁₀, un radical alkyle halogéné en C₁-C₂₀, un radical aryle halogéné en C₆-C₁₀, ou un atome d'halogène, ou bien
R¹ et R² ou R³ et R⁴ forment un cycle avec l'atome qui les relie.
R⁵ représente un radical alkylène en C₁-C₈, un radical arylène en C₆-C₁₀, un radical arylalkylène en C₇-C₄₀, un radical alkylarylène en C₇-C₄₀, un radical O[Si(CH₃)₂-O]ₚ-, dans lequel p est un nombre entier de 1 à 5, ou bien un atome de chalcogène, et
R⁶ et R⁷ sont identiques ou différents et représentent un radical indényle substitué ou non substitué,
par réaction avec un composé de la formule II 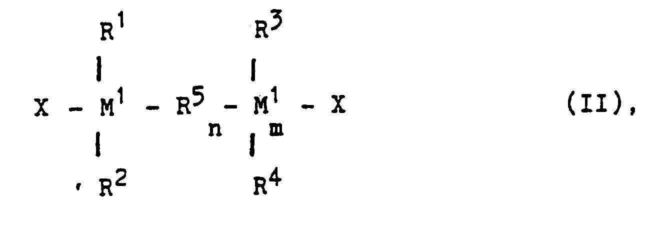
dans laquelle M¹, R¹ R², R³, R⁴, m et n ont la signification indiquée précédemment et X représente un atome d'halogène, caractérisé en ce que le composé de la formule II est introduit en solution ou en suspension et que l'on ajoute la solution d'un composé de formule III ou IV
R⁶-M² (III)
R⁷-M² (IV)
dans lesquelles R⁶ et R⁷ ont la signification indiquée précédemment et M² représente un atome de métal alcalin, à une température de -40 à 100°C pendant de 1 à 100 heures, à la solution ou la suspension du composé II.

2. Utilisation du composé de la formule I 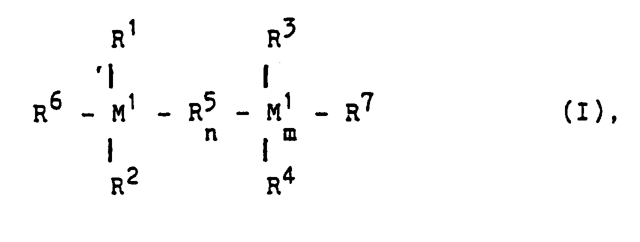
dans laquelle M¹ représente un atome de silicium ou de germanium,
m est 0 ou 1 et, lorsque m est 0, n est 0 et, lorsque m est 1, n est 0 ou 1
R¹, R², R³ et R⁴ sont identiques ou différents et représentent un atome d'hydrogène, un radical alkyle en C₁-C₃₀, un radical alcényle en C₂-C₁₀, un radical aryle en C₆-C₁₀, un radical arylalkyle en C₇-C₄₀, , un radical alkylaryle en C₇-C₄₀, un radical arylalcényle en C₈-C₄₀, un radical alcoxy en C₁-C₁₀, un radical aryloxy en C₆-C₁₀, un radical alkyle halogéné en C₁-C₂₀, un radical aryle halogéné en C₆-C₁₀, ou un atome d'halogène, ou bien
R¹ et R² ou R³ et R⁴ forment un cycle avec l'atome qui les relie.
R⁵ représente un radical alkylène en C₁-C₈, un radical arylène en C₆-C₁₀, un radical arylalkylène en C₇-C₄₀, un radical alkylarylène en C₇-C₄₀, un radical O[Si(CH₃)₂-O]ₚ-, dans lequel p est un nombre entier de 1 à 5, ou bien un atome de chalcogène, et
R⁶ et R⁷ sont identiques ou différents et représentent un radical indényle substitué,
pour la préparation de composants de catalyseurs de type métallocène pour la polymérisation d'oléfines.
